# EUROPEAN PATENT APPLICATION

(11) **EP 4 528 144 A1**
(43) Date of publication of application: **26.03.2025**
(21) Application number: 24201338.1
(22) Date of filing: 19.09.2024
(51) Int. Cl.: F17C 3/02, F17C 3/04

(54) **VACUUM INSULATED CRYOGENIC STORAGE TANK AND METHOD FOR MANUFACTURING THE SAME**

(30) Priority: 20.09.2023 NL 2035836
(71) Applicant: TriCryo B.V., 1771 RW Wieringerwerf (NL)
(72) Inventor: Keezer, Marcel Nicolaas, 1771 RW Wieringerwerf (NL)
(74) Representative: Arnold & Siedsma

(57) **Abstract**

The invention relates to a vacuum insulated cryogenic storage tank, comprising an inner tank and an outer tank defining an interspace between them, which is configured to allow maintaining a reduced pressure between them. The vacuum insulated cryogenic storage tank further comprises a spacing system for keeping the interspace between the inner and outer tank. According to the invention, the spacing system comprises a suspension system comprising tension members such as fibre-reinforced straps spanning substantially from the inner to the outer tank, wherein the tension members engage on the inner tank at a distance from a central longitudinal axis of the inner tank. The invention also relates to a method of manufacturing a vacuum insulated cryogenic storage tank.

## Description

The invention relates to a vacuum insulated cryogenic storage tank. In general, such a tank comprises an inner tank for holding a cryogenically cooled medium and an outer tank, the inner and outer tank defining an interspace between them, and being configured to allow maintaining a reduced pressure between them, wherein insulation is provided in the space between the inner tank and the outer tank. The vacuum insulated cryogenic storage tank further comprises an input/output system coupled to an interior of the inner tank and the external of the outer tank, and a spacing system for keeping the interspace between the inner and outer tank.

Vacuum insulated cryogenic storage tanks of the above-described type are known in the art, and perform adequately to some extent.

In particular, reference is made to US 7,757,882 B2, which discloses a cryogenic storage tank, in which straps suspend an inner tank from its front and end cap within an outer tank.

The prior art tanks may still suffer from too much heat leaking in (heat influx) so that the cryogenically cooled liquid held in the inner tank heats up too quickly. Additionally or alternatively, the known tanks may be relatively heavy. As a result, a relatively low amount of hydrogen can be stored in a relatively high-weight tank. This ratio is described by the gravimetric index, which for heavy tanks thus is relatively low. Both these disadvantages lead to a desire to improve the known tanks, in order to make them more suitable for use in e.g. aviation, where they could be used to hold liquid cryogenic hydrogen. In aviation, the tank should be able to withstand accelerations of e.g. 10 G or more, whereas the hydrogen needs to be kept at a temperature of ca. 20 K.

The invention therefore has as its object to improve the vacuum insulated cryogenic storage tank of the preamble.

The object is achieved if the spacing system comprises a suspension system comprising fibre-reinforced straps spanning substantially from the inner to the outer tank, wherein the fibre-reinforced straps engage on the inner tank at a distance from a central longitudinal axis of the inner tank.

The fibre-reinforced straps have been found to be particularly suitable for suspending the inner tank from a mechanical perspective. Yet, they have a relatively low thermal conductivity and therefore reduce the leakage of heat with respect to material of similar strength.

The applicant has found that using multiple straps, it is possible to suspend the inner tank in place, without requiring a traditional, rigid connection between inner and outer tank. Leakage of heat that would otherwise occur via the rigid connection is omitted. Instead, conductive leakage is only possible via the straps if the inner tank is suspended solely from straps. Yet, due to their low thermal conductivity, the leakage is relatively low.

The straps have the additional or further advantage that they allow a relatively light-weight construction of the tank.

The weight of the tank is a highly relevant parameter in aviation, yet it has proven difficult to provide a sufficiently sturdy tank that is relatively light-weight. In part, this stems from the fact that in order to withstand forces and accelerations that may occur in aviation, e.g. in fixed-wing aircraft, the inner tank needs to be fixed especially sturdily to the outer tank using the spacing system. This puts mechanical requirements on the spacing system, which in the art are met by using high strength - but high density - materials. At the same time, these materials tend to have a relatively high thermal conductivity of heat, thereby exacerbating the leakage of heat to the inner tank.

Another relevant parameter in the design of tanks for e.g. aviation, is the capacity of the tank in relation to its volume, i.e. the volumetric index. Due to the use of fibre-reinforced straps, a relatively high volumetric index can be achieved. The applicant has found that fibre-reinforced straps have such a low thermal conductivity, that even a relatively short length of material may be sufficient for providing an adequate or advantageous resistance to heat conduction between the inner and outer tank. Therefore, by shortening the straps, the inner tank may take up a relatively large portion inside the outer tank, thereby increasing the capacity but not the total volume of the tank, so that the volumetric index increases.

One way of shortening the straps, is by suspending the inner tank from an off-center position, i.e. away from the longitudinal axis. At the same time a certain amount of headspace is created at the longitudinal end of the inner tank. The headspace may be used to either increase the size of the inner tank with respect to the outer tank, or to include e.g. parts of the input/output system or additional insulation. In any case, the design of the tank using the off-center position is more compact and elegant, and may thus have a higher volumetric and/or gravimetric index.

In other words, because the off-center position of the straps with respect to the inner tank, the straps can be relatively short. Thus, the already low weight of the straps due to the material choice, is reduced even further. More importantly however, space needed for the straps is also reduced and may instead be used for storage capacity. Thus, volumetric and gravimetric index may be increased.

Further advantages may be achieved if the straps are endless loops. In such a case, the straps may be relatively easily connected to the inner and outer tanks, and no additional measures are needed to resolve end-effects - after all in looped straps the straps have no ends.

The straps may be e.g. unidirectional straps, in the sense that their fibres are substantially uni-directional i.e. aligned. Such uni-directional straps are particularly strong in the direction of the fibres, which may correspond to the longitudinal direction of the straps. In that case, the flexibility of the straps allows to automatically correct for inaccuracies in the production process by automatic deformation of the straps, thereby aligning their longitudinal direction, so that optimal use can be made of the uni-directional characteristics. The same principle applies when the tank is accelerated.

In order to complement the uni-directional characteristics of the straps, the straps may be suspended from the inner and outer tank, e.g. via hooks, over a joint that does not restrain rotation of the strap in one, two or three perpendicular rotational directions with respect to the tanks.

The inner and/or outer tank may be of any suitable shape. In particular, substantially cylindrical tanks are considered. Whether the tanks are cylindricial or otherwise of substantially oblong shape, it may be advantageous to fix one longitudinal end of the inner tank relative to the outer tank, whereas the other, opposing longitudinal end of the inner tank is free to move with respect to the outer tank, both at least in the longitudinal direction. Accordingly, thermal expansion and shrinking of the inner tank may be compensated for by a relatively unhindered movement of the free end of the tank. It is especially practical if the fixed longitudinal end is also the end at which fluid is input into/output from the inner tank.

In general, fixing the one longitudinal end of the inner tank in the longitudinal direction may be achieved by engaging the inner tank at or close to the longitudinal end to be fixed, whereas the other, free end of the inner tank is not engaged as closeby.

The straps may engage the inner and/or outer tank via hooks or loops fixed to the respective tank. Further details of such hooks or loops are described further below.

In an embodiment, the inner tank comprises two opposing longitudinal ends, wherein the fibre-reinforced straps engage on the inner tank at a position along the central longitudinal axis between the two opposing longitudinal ends.

By engaging the inner tank at that position, the straps effectively engage the inner tank from its sides. Accordingly, the ends themselves are kept free, thereby allowing a more compact design. Moreover, engaging the inner tank from the side may make the entire system more easily constructable. It is noted that the straps may engage the outer tank also at a position away from its respective longitudinal ends, i.e. at its sides. The ends of both the inner and outer tank, which may be formed by end caps, can thus be free of (parts of) the spacing system.

More in particular, the fibre-reinforced straps may engage the inner tank and/or the outer tank on a side wall thereof which extends between the two longitudinal ends.

Advantageously, the inner tank may have a main section and at least one, suspension section both defined along the central longitudinal direction, wherein the main section has a larger transversal cross sectional dimension than the at least one suspension section, wherein the fibre-reinforced straps engage the inner tank on the at least one suspension section.

Since the suspension section has a reduced cross sectional area, such as a diameter, sufficient space can be made between the inner and outer tank for the straps. However, since the main section has a larger cross sectional dimension, it still allows for a relatively large capacity.

In particular, the main section may have a larger cross sectional area as compared to the suspension section.

The difference in cross sectional dimensions and/or area may account for a "stepped" shape of at least the inner tank in a side or top view (i.e. looking at a side surface, not at the longitudinal ends).

Of course the mechanical inverse is also possible. In that case the outer tank may define a suspension section and a main section, wherein the relevant dimension or area is bigger for the suspension section. This would also allow sufficient space for the spacing system (including the straps), but would not require the outer tank be particularly big.

As a result, the volumetric index may be relatively high.

It is advantageous if the at least one suspension section is arranged adjacent a longitudinal end of the inner tank.

When the suspension section is arranged at a longitudinal end, e.g. adjacent but not on the longitudinal end, the design of the tank may be especially elegant. In particular, less steps in the profile of the tank may be needed. In fact, the tank can have a longitudinal end, for instance an end cap, fitted directly to the suspension section on one end thereof opposite the main section. This has the further advantage that the tank may still be suspended close to its ends, which makes for a relatively sturdy design.

In practice, the inner and/or outer tank would comprise two such suspension sections. The two suspension sections could be adjacent the two longitudinal ends. Further suspension sections could be introduced in between if more support is needed.

It is possible to create a recess, defined by the suspension section having a smaller transversal cross section than the main section, which extends along the entire circumference of the inner tank.

In such a case the tank would be relatively easy to construct, and the tank would be rotationally symmetric as much as possible. The latter may enhance structural integrity.

However, the recess defined by the suspension section having a smaller transversal cross section than the main section may also extend along only a part of the circumference of the inner tank.

In that case, the recess is thus relatively small as compared to the circumference of the inner tank, so that relatively little storage space is absorbed by the recess. Accordingly, the volumetric index may be increased.

In an embodiment, the suspension system comprises brackets fixed to the inner and the outer tank for suspending the fibre-reinforced straps between the brackets. The brackets may comprise or consist of, for example rigid, hooks or loops, from which the straps could hang.

The brackets may be annular in shape. Accordingly they may extend along the circumference of their respective tank. In such a configuration, they take up relatively little space and/or provide further strength to the tanks and/or are especially strong.

Further advantages may be obtained, in the configuration with the inner tank having the two opposing longitudinal ends, if one or both of said longitudinal ends is convex.

The convex shape of the ends, for instance end caps, is mechanically stable for the vacuum forces expected to be working on it from the outside. At the same time, the configuration maximizes space available for storage, thus increasing capacity.

The outer tank may have two opposing longitudinal ends, wherein one or both of said longitudinal ends is concave.

The concave shape of the outer tank also ensure mechanical stability for the vacuum forces, and reduces headspace within the outer tank, thereby enhancing volumetric index.

In both cases (convex inner tank, concave outer tank ends) the increased stability can be used by applying a relatively thin (sheet) material, for instance of a smaller thickness than the sides of the respective tanks. This further optimizes the gravimetric index.

At the same time, the concave and convex shape together, but also to some extend alone, create a substantially annular shaped headspace between inner and outer tank, roughly between the circumference of the inner tank and the inner contour of the outer tank. This headspace can be used for internal componentry, such as conduits, couplings, pumps, etc. without requiring too much additional space, thereby further optimizing volumetric index. This advantage can be enjoyed best if the convex and concave shapes are combined at the same longitudinal end.

As an example of effective use of the headspace, the input/output system comprises at least one conduit extending at least partly through the headspace defined by the concave and/or convex surface of the outer or inner tank respectively. In particular, the conduit may follow the annular shape of the headspace along a portion of its length, for instance along at least 30% of the circumference of the annular headspace, preferably at least 40%, more preferably about 50%. As an alternative way of optimizing volumetric index, the input/output system may comprise at least one conduit extending at least partly around the suspension section, in particular around at least 30% of the suspension section, preferably at least 40%, more preferably about 50%. This may be especially advantageous if the recess defined by the suspension section extends all the way around the circumference. Nevertheless in either case, the additional space made available by the suspension section being relatively small compared to the main section, allows space for the conduit. Accordingly, a compact design is obtained.

The invention also relates to a method of manufacturing a vacuum insulated cryogenic storage tank, for instance according to any of the preceding claims, the method comprising:
a) manufacturing a jacket as part of an outer tank;
b) manufacturing an inner tank;
c) prefabricating the inner tank;
d) inserting the inner tank into the jacket and fixing it in place; and
e) sealing the jacket to form an outer tank.

According to the invention, step c) comprises:
- providing insulation on the inner tank; and
- providing a suspension system and fixing it to the inner tank;
and optionally:
- providing an input/output system on the inner tank and/or
- providing an end cap of the outer tank on the inner tank.

Due to the unique design of the suspension system, it can be pre-fixed to the inner tank before it is introduced in the outer tank.

By providing insulation and the suspension system before inserting the inner into the outer tank, the method may be especially efficient. Also, the insulation may be inspected and/or tested before assembly in the outer tank.

When the input/output system is provided before step d), it may be tested and optionally repaired easily, before it is inserted in the outer tank.

The whole method may become especially efficient if an end cap of the outer tank is attached to the inner tank before insertion. In that case, the sub-assembly including the inner tank and the end cap will seal itself after insertion.

It is noted that the suspension system may include brackets to be fixed to the outer tank. These brackets may also be fixed to the inner tank before insertion. If required, the brackets can be fixed to the outer tank from the outside. Such processes are known to the skilled person. For instance, an opening could be made in the outer tank allowing welding from the outside. The opening can be sealed after.

The invention will be further elucidated by reference to the figures, in which:
Figures 1A and 1B show a schematic representation of an inner and outer tank in cross section, in a cross sectional and in a perspective view respectively;
Figure 2 shows the tanks of figures 1A and 1B, with suspension system and input/output system, still schematically and in a perspective view, with part of the tanks removed for visibility;
Figure 3 shows a close-up of the input and output system shown in figure 2; and
Figure 4 shows highly schematically a cross sectional view of an alternative tank shape.

In the figures, like elements are referred to using like reference numerals. Across different embodiments, like elements are referred to using reference numerals increased by one hundred (100).

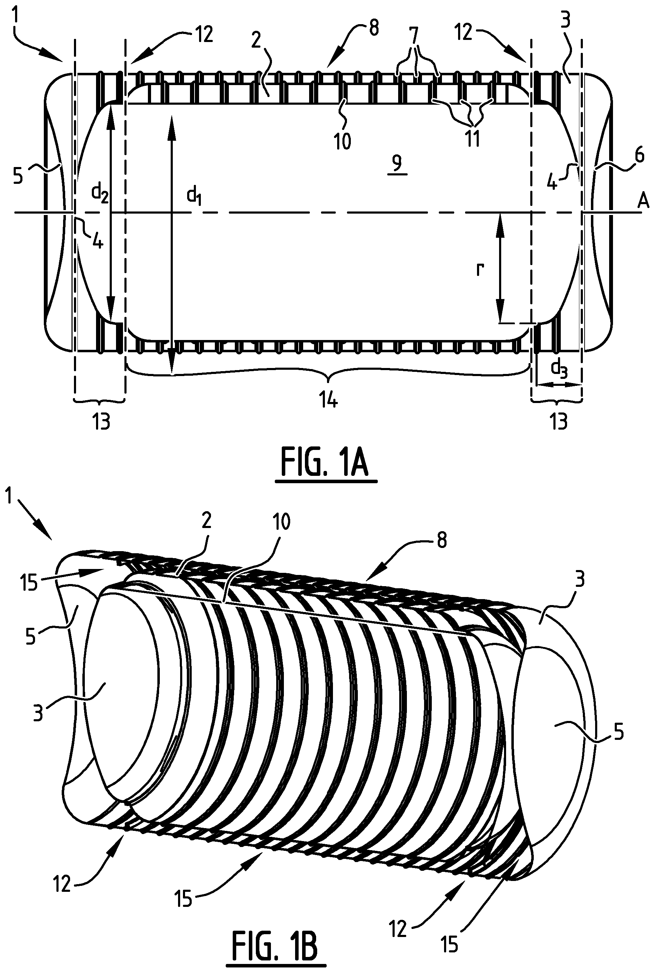

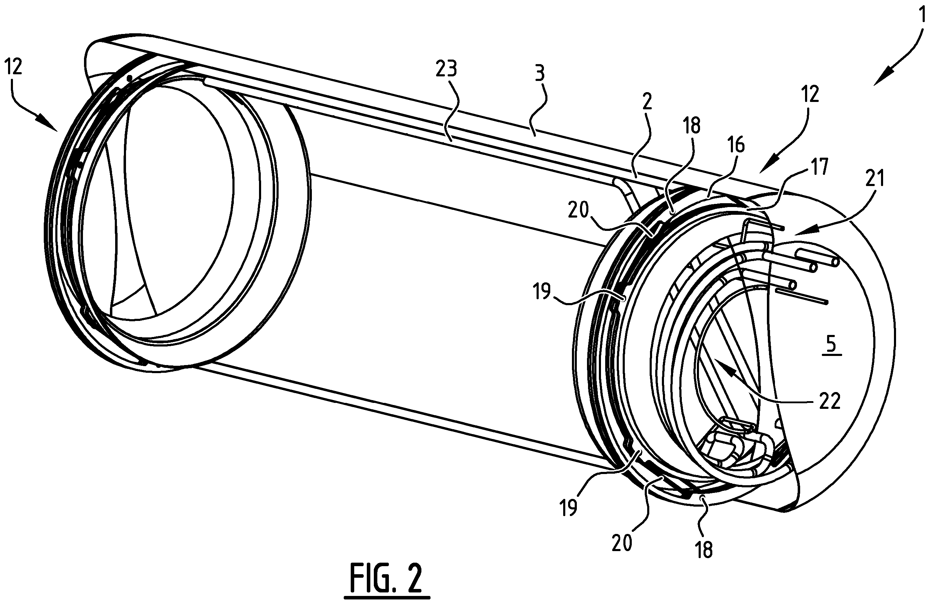

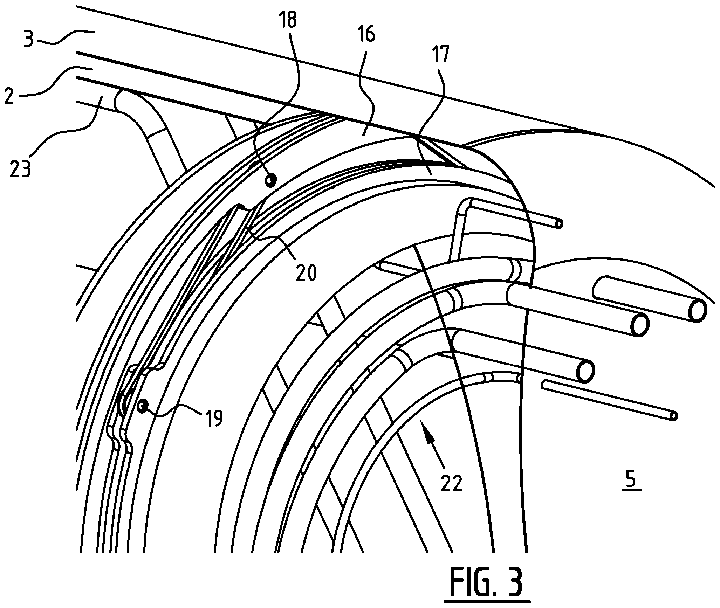

Figures 1A and 1B shows vacuum insulated cryogenic storage tank 1, which is cut in half. The cross section is shown in figure 1A, and the same is shown in figure 1B but in perspective view. The cryogenic storage tank 1 includes an inner tank 2 and an outer tank 3. Between them is an interspace 15, which completely surrounds the inner tank 2. In order to provide for insulation, the interspace 15 can be maintained at a reduced pressure, i.e. a (near) vacuum, so that heat transfer via conductance is reduced or avoided. Further insulation (not shown), such as multi layer insulation, is provided in the interspace around the inner tank 2. An input/output system is coupled to the inner tank 2, as shown in figures 2 and 3. The input/output system is left out of figures 1A and 1B for the sake of clarity. The tank is shown with liquid hydrogen 9 in the inner tank, filled up to a liquid level 10.

The cryogenic storage tank 1 includes a spacing system 12 for keeping the inner tank 2 at a distance from the outer tank 3. Details of the spacing system 12 are described further below. The inner tank 2 comprises two longitudinal ends 4 which oppose each other and are both convex. The longitudinal ends 4 are formed by end caps, and in this example close an otherwise substantially cylindrical inner tank 2. The longitudinal ends 5, 6 of the outer tank 3 are convex. The outer tank 3 is also cylindrical. Both the inner tank 2 and the outer tank 3 are provided with external ribs 11, 7 respectively, to increase the strength of the respective tanks. The inner tank 2 has a main section 14 and two suspension sections 13, near its longitudinal ends 4. The sections 13, 14 are shaped such that a cross sectional dimension d₁, d₂, in this example the radius or diameter, is bigger for the main section 14. The cross sectional area is therefore also bigger for the main section. This creates space outside the suspension sections 13 for the suspension system 12.

Figures 2 and 3 show more detail of the same tank of figures 1A and 1B. In particular, it can be seen that the suspension system 12 comprises an annular outer bracket 16 and an annular inner bracket 17 on each end of the tanks 2, 3. The outer brackets 16 extend circumferentially along the inner side of the outer tank 3, and the inner brackets 17 extend circumferentially along the outer side of the inner tank 2. Each bracket 16, 17 consist of two equal interconnected flanges, which are interconnected by pins 18, 19. The pins 18, 19 are provided at strategic positions, in this case on four equidistant positions around the circumference. The pins of the inner bracket 19 are spaced apart in the circumferential direction from the pins of the outer bracket 18. Between the pins 18, 19 straps 20 suspend the inner tank. The straps 20 are fibre-reinforced, in this case looped i.e. endless straps. The straps are attached to the respective brackets 16, 17 by looping them around the pins 18, 19. It is noted that whenever straps 20 are used for suspension, it may be advantageous to place their engagement points at the inner and outer tank respectively spaced apart in the circumferential direction. The spacing is not dependent on the brackets being annular, double flanged, or having pins, etc. In any case, the straps 20 are spaced around the inner tank so that together, they suspend the inner tank 2 in the outer tank.

Part of the input/output system 21 is also shown. The input output system 21 connects at least to the interior of the inner tank 2 so as to insert or remove material. Additional conduits for cooling, vacuuming, pressure release etc. may also be provided. The input/output system 21 comprises for that purpose conduits 22 which extend in the interspace 15 between the tanks 2, 3. The conduits 22 have sections of a curved configuration, which substantially corresponds to the headspace available due to the convex and concave shapes of the ends 4, 5, 6. The curved sections of the conduits 22 loops approximately 50% of the total circumference. At least one dipper tube 23 is provided to run in the inner tank 2 towards the opposite longitudinal end. Other than that, the input/output system 16 is solely placed at a single longitudinal end.

Referring again to figure 1, it is noted the straps engage the tanks at a distance d₃ from the longitudinal end 4 of the inner tank 2, and at its side, i.e. at a distance r from the central longitudinal axis A.

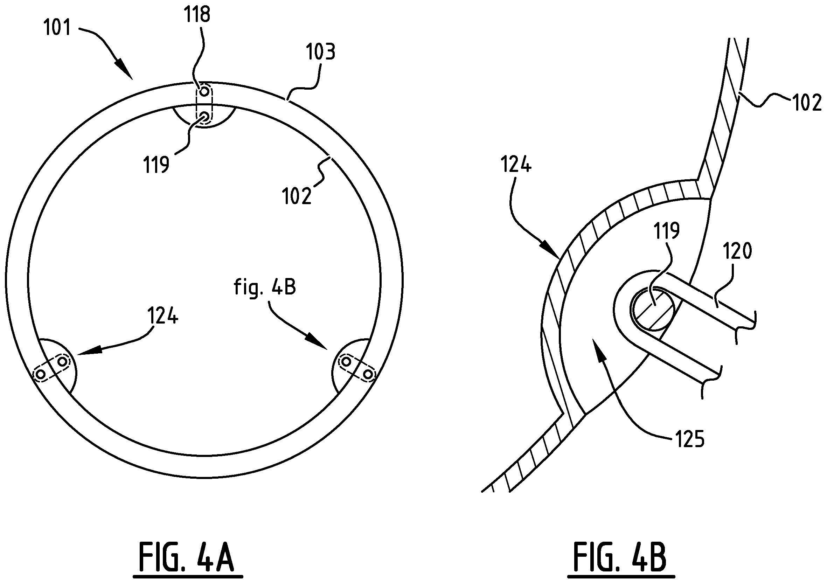

Figure 4 shows another embodiment of a vacuum insulted cryogenic storage tank 101, which is similar to that of the previous figures except for the below-described features. Instead of four, it has three straps 120, but any suitable number (such as four specifically) could be used. The straps 120 are still suspended from pins 118, 119, but these are not spaced apart circumferentially (but they could have been). Instead of annular brackets, the pins 118, 119 are suspended from indents 124 in the wall of the inner tank 102, which locally reduce the radius of the inner tank 102. The indents define recesses 125 at the outside of the inner tank 102, where the pins 118, 119 in the recesses 125. The straps 120 still loop around the pins 118, 119. By having the local indents 124, a relatively large part of the inner tank 102 can still be used as effective storage space.

Although the invention has been described with reference to specific examples and embodiments, it is not limited thereto.

As an example, many of the features described in this application also find use in a similar tank in which straps are not fibre-reinforced straps, or are not straps at all. As an example, metal rods or wires, or rods or wires of some other material, may be used as a substitute. Thus, the inventive concepts presented herein may also be applied to a vacuum insulated cryogenic storage tank as described herein, wherein the fibre reinforced straps are replaced by straps of some other material, or by wires or rods, of e.g. metal (such as steel). That is to say, any and all features described above in relation to the fibre reinforced straps may also apply to the tank with substitutes for straps, described broadly herein as tension members.

In fact, the invention is defined also by the attached claims.

## Claims

1. Vacuum insulated cryogenic storage tank, comprising an inner tank for holding a cryogenically cooled medium and an outer tank, the inner and outer tank defining an interspace between them, and being configured to allow maintaining a reduced pressure between them, wherein insulation is provided in the space between the inner tank and the outer tank, the vacuum insulated cryogenic storage tank further comprising an input/output system coupled to an interior of the inner tank and the external of the outer tank, and a spacing system for keeping the interspace between the inner and outer tank,
**characterized in that**
the spacing system comprises a suspension system comprising fibre-reinforced straps spanning substantially from the inner to the outer tank, wherein the fibre-reinforced straps engage on the inner tank at a distance from a central longitudinal axis of the inner tank.

2. Vacuum insulated cryogenic storage tank according to the previous claim, wherein the straps are endless loops.

3. Vacuum insulated cryogenic storage tank according to any of the preceding claims, wherein the inner tank comprises two opposing longitudinal ends, wherein the fibre-reinforced straps engage on the inner tank at a position along the central longitudinal axis between the two opposing longitudinal ends.

4. Vacuum insulated cryogenic storage tank according to the previous claim, wherein the fibre-reinforced straps engage the inner tank on a side wall thereof which extends between the two longitudinal ends.

5. Vacuum insulated cryogenic storage tank according to the previous claim, wherein the inner tank has a main section and at least one, suspension section both defined along the central longitudinal direction, wherein the main section has a larger transversal cross sectional dimension than the at least one suspension section, wherein the fibre-reinforced straps engage the inner tank on the at least one suspension section,
wherein optionally the at least one suspension section is arranged adjacent a longitudinal end of the inner tank.

6. Vacuum insulated cryogenic storage tank according to claim 5, comprising two such suspension sections.

7. Vacuum insulated cryogenic storage tank according any of claims 5-6, wherein a recess defined by the suspension section having a smaller transversal cross section than the main section extends along the entire circumference of the inner tank, or
wherein a recess defined by the suspension section having a smaller transversal cross section than the main section extends along only a part of the circumference of the inner tank.

8. Vacuum insulated cryogenic storage tank according any of the preceding claims, wherein the suspension system comprises brackets fixed to the inner and the outer tank for suspending the fibre-reinforced straps between the brackets,
wherein optionally the brackets are annular in shape.

9. Vacuum insulated cryogenic storage tank according to any of the preceding claims, the inner tank having the two opposing longitudinal ends, wherein one or both of said longitudinal ends is convex.

10. Vacuum insulated cryogenic storage tank according to any of the preceding claims, wherein the outer tank has two opposing longitudinal ends, wherein one or both of said longitudinal ends is concave.

11. Vacuum insulated cryogenic storage tank according to any of the preceding claims, wherein the input/output system comprises at least one conduit extending at least partly around the suspension section, in particular around at least 30% of the suspension section, preferably at least 40%, more preferably about 50%.

12. Vacuum insulated cryogenic storage tank according to claim 9 or 10, wherein the input/output system comprises at least one conduit extending at least partly through a headspace defined by the concave and/or convex surface of the outer or inner tank respectively.

13. Method of manufacturing a vacuum insulated cryogenic storage tank, for instance according to any of the preceding claims, the method comprising:
a) manufacturing a jacket as part of an outer tank;
b) manufacturing an inner tank;
c) prefabricating the inner tank;
d) inserting the inner tank into the jacket and fixing it in place;
e) sealing the jacket to form an outer tank,
**characterized in that** step c) comprises:
- providing insulation on the inner tank; and
- providing the suspension system and fixing it to the inner tank;
and optionally:
- providing an input/output system on the inner tank and/or
- providing an end cap of the outer tank on the inner tank.

14. Method according to claim 13, further comprising testing the inner tank, and optionally the input/output system, before step d).

15. Vacuum insulated cryogenic storage tank, comprising an inner tank for holding a cryogenically cooled medium and an outer tank, the inner and outer tank defining an interspace between them, and being configured to allow maintaining a reduced pressure between them, wherein insulation is provided in the space between the inner tank and the outer tank, the vacuum insulated cryogenic storage tank further comprising an input/output system coupled to an interior of the inner tank and the external of the outer tank, and a spacing system for keeping the interspace between the inner and outer tank,
**characterized in that**
the spacing system comprises a suspension system comprising tension members, such as straps, rods or wires, made of e.g. metal such as steel, spanning substantially from the inner to the outer tank, wherein the tension members engage on the inner tank at a distance from a central longitudinal axis of the inner tank.
